(19) Europäisches Patentamt European Patent Office Office européen des brevets

(11) **EP 4 472 106 A1**

(12) **EUROPEAN PATENT APPLICATION**

(43) Date of publication:
**04.12.2024 Bulletin 2024/49**

(21) Application number: **23305866.8**

(22) Date of filing: **01.06.2023**

(51) International Patent Classification (IPC):
**H04B 10/40** (2013.01)  **H04B 10/69** (2013.01)
**H04L 25/03** (2006.01)

(52) Cooperative Patent Classification (CPC):
**H04B 10/6971; H04B 10/40; H04L 25/03019**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Mitsubishi Electric R&D Centre Europe B.V.**
**1119 NS  Schiphol Rijk Amsterdam (NL)**
Designated Contracting States:
**FR**
• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventor: **FROC, Gwillerm**
**35708 RENNES Cedex 7 (FR)**

(74) Representative: **Cabinet Le Guen Maillet**
**3, impasse de la Vigie**
**CS 71840**
**35418 Saint-Malo Cedex (FR)**

(54) **METHOD FOR CONFIGURING EQUALIZATION RESOURCES OF AN EQUALIZER OF A TRANSCEIVER OPTICAL DEVICE**

(57) A method for configuring equalization resources of an equalizer of a transceiver optical device, wherein the equalization resources are used by the equalizer for performing equalization on optical signals received via a channel of an optical line, comprises: obtaining environmental parameters values, wherein the environmental parameters values are values of environmental data about physical parameters or derivatives which have influence on the channel of the optical line; obtaining channel depth estimation from past experience in view of the environmental parameters values; selectively activating the equalization resources, for performing equalization on the optical signals received via a channel of an optical line, according to the obtained channel depth estimation.

Fig. 3

## Description

TECHNICAL FIELD

The present invention generally relates to optical communications and more particularly to configure equalization resources of an equalizer of a transceiver optical device.

RELATED ART

Optical communications are increasingly used to give network access (typically Internet access) to residential or office gateways, or data centers, in the scope of FTTH ("Fiber To The Home") technology deployment. Optical communications may also be used to ensure mobile infrastructure backhauling for instance in the scope of the deployment of 3G (3rd generation) or 4G (4th generation) mobile technologies using typically Point-to-Point arrangements.

With the emerging 5G (5th generation) mobile technology, fronthauling is about to appear and the needs in terms of data rate capabilities are significantly increased. One may refer to the International Mobile Telecommunications (IMT) recommendations ITU-R M.2083 "IMT Vision: Framework and overall objectives of the future development of IMT for 2020 and beyond", released in September 2015. In such a framework, fronthauling is achieved by moving upstream in the mobile infrastructure processing functions that were previously performed at base stations or nearby in the 3G or 4G mobile technologies. It is referred to as "split options" in the specifications 3GPP TR 38.801 V 14.0.0 "Study on new radio access technology: Radio access architecture and interfaces", released in March 2017 (see more particularly therein Section 11 and Table A-1).

Therefore, 5G mobile technology has a wider set of requirements as compared to FTTH requirements that have driven optical access technology evolution until now. 5G mobile technology translates thus into higher nominal data rates, reduced latency and denser deployment, among others.

Furthermore, the Internet of Things, edge computing, Artificial Intelligence, robotics and augmented reality, etc. are technology trends that are highly demanding in terms of communication infrastructures. However, these technology trends have also widely different requirements in terms of data throughputs or quality of services which shall be supported by optical access networks.

Optical access systems shall thus nowadays be able to carry very high data rate throughputs (beyond 50 Gbits/s or even several hundreds of Gbits/s in a near future) as well as very low data rates to carry IoT flows for instance. Optical access networks shall be able to support low latency, as a fraction of one millisecond, for applications such as virtual reality or industrial applications. This requires highly flexible and efficient optical infrastructure.

Due to this variety of applications and corresponding requirements, one may now refer to "optical access and aggregation networks" instead of simply referring to "optical access networks".

It has to be moreover considered that optical lines may have to cope with a constraint of very different lengths, typically from few hundreds of meters to 40 kilometers.

Such a wide variety of requirements and constraints imply difficulties in terms of managing optical signal time and frequency spreading.

First of all, chromatic dispersion varies according to the length of optical lines and further depends on modulated signal bandwidth and on optical signal wavelength. For example, considering a wavelength around 1550 nm, time spreading due to chromatic dispersion can vary from a fraction of one symbol period up to 20 symbol periods as the length of the optical line varies from 1 kilometer to 40 kilometers at @3dB, 100 GHz. Furthermore, environmental temperature variations have also a noticeable effect on chromatic dispersion in high bitrate optical communication systems. And it should be noticed that optical access and aggregation networks are typically deployed in outdoor conditions, namely in a temperature-uncontrolled environment.

Since optical lines are typically deployed in outdoor conditions, said optical lines incur vibrations due to wind and vehicles potentially passing by, in addition to the aforementioned temperature variations. Vibrations and temperature variations impact polarization mode dispersion (PMD). Polarization mode dispersion results from a relative delay between both polarization axis in case of an application of anisotropic constraints on the optical line. This relative delay depends on the root square of the length of the optical line.

It can be demonstrated that, for an outage probability of $10^{-7}$ (which corresponds to 3 seconds of failure per year), a channel spreading six times greater than mean differential group delay (DGD). In optical access and aggregation networks, the mean differential group delay varies with a magnitude that can range over a wide scale, from 0.05 picosecond per $km^{0.5}$ as typically encountered in core networks, up to tens of picoseconds per $km^{0.5}$ in harsh conditions, which is hundreds of times higher than the typical value in core networks. Thus, for an outage probability of $10^{-7}$ and considering a mean differential group delay that can varies from 0.05 ps/$km^{0.5}$ to 10 ps/$km^{0.5}$, the variation of time spreading relates to the polarization mode dispersion can vary from a fraction of the symbol period to almost 20 symbol periods for a 30 Gbauds system or even 45 symbol periods considering a 100 Gbauds system.

Another aspect is that, in uncontrolled environments as encountered by optical access and aggregation networks, the nominal wavelength of laser sources or the central wavelength of optical band-pass filters, which prevent from inter-channel cross talk for instance, can shift. Since such kind of devices are located at different geographical places in optical access and aggregation networks deployment, such devices are subject to different environment conditions, which induce relative wavelength shifts. For example, considering an optical bandpass filter of 100 GHz at 3dB based on Bragg gratings, its time response may spread over 200 picoseconds when a carrier wavelength shifts over the pass band of the optical band-pass filter. It may correspond to a time variation of almost 10 symbol periods for a 30 Gbauds system or even 30 symbol periods considering a 100 Gbauds system.

It can also be added that optical access and aggregation networks use a variety of transceivers (many vendors, variable working points), which implies various kinds of pulse distortion leading to different symbol spreading behaviors.

As can be understood from the foregoing, many physical phenomena impact optical signal spreading in optical access and aggregation networks. Such physical phenomena may have been considered as insignificant in the past, since high needs in terms of data rate capabilities were only considered for core networks with controlled environments, while optical access networks in uncontrolled environments targeted far lower needs in terms of data rate capabilities.

Optical access and aggregation networks have now to cope with these physical phenomena. Equalization shall therefore be performed. Equalization is a signal processing procedure that aims at mitigating inter-symbol interference (ISI) on a communication channel.

For the sake of understanding, considering linear equalization in time domain, an estimation $\hat{I}_k$ of a k-th symbol $I_k$ of a transmitted optical signal $I$ which is obtained from equalization over successive received symbol samples $\{v_{k-K} ; v_{k+K}\}$ may be expressed as follows:

$$\hat{I}_k = \sum_{j=-K}^{K} \left( C_j \times v_{k+j} \right)$$

wherein j is an integer varying from -K to K, which means that *2K+1* equalization coefficients $C_j$ are used in conjunction with *2K+1* symbol samples $v_{k+j}$. Symbols before *j=-K* and beyond *j=K* are insignificant for obtaining the estimation $\hat{I}_k$, *2K + 1* hence representing channel depth.

Different techniques may be used to determine the equalization coefficients $C_j$ and to update them according to evolution of the communication channel over time. Data-aided schemes that are based on the analysis of dedicated exchanged sequences, or blind equalization techniques as LMS (Least Mean Square) or CMA (Constant Modulus algorithm), which do not need any prior knowledge of channel response to find adequate values of equalization coefficients (which are often referred to as "taps" in equalization in the time domain).

As dimensioning of the optical links, dimensioning of equalization resources needs to be defined according to the worst spreading case. In view of the foregoing, numerous pieces of information have to be retrieved from the channel, numerous symbols have to be processed in order to perform equalization in the worst spreading case, which means that numerous equalization coefficients have to be computed, and which further means that numerous computing resources have to be dedicated to optical signal equalization once the equalization coefficients are adequately determined.

Relying on the worst spreading case to operate equalization resources is however not efficient in terms of equalization resources usage, notably in terms of hardware blocks allocation, in terms of equalization signaling overhead and thus computing resources usage, and in terms of energy consumption.

It is therefore desirable to provide an energy-effective solution suitable for optical access and aggregation networks. It is desirable to provide a solution that is simple as possible.

SUMMARY OF THE INVENTION

To that end, it is proposed herein a method for configuring equalization resources of an equalizer of a transceiver optical device, wherein the equalization resources are used by the equalizer for performing equalization on optical signals received via a channel of an optical line, and wherein the method comprises: obtaining environmental parameters values, wherein the environmental parameters values are values of environmental data about physical parameters or derivatives which have influence on the channel of the optical line; obtaining channel depth estimation from past experience in view of the environmental parameters values; selectively activating the equalization resources, for performing equalization on the optical signals received via the channel of the optical line, according to the obtained channel depth estimation.

Thus, operation of the equalization resources is improved in terms of equalization resources usage, notably in terms of hardware blocks allocation, in terms of equalization signaling overhead and thus computing resources usage, and in terms of energy consumption.

In a particular embodiment, for obtaining channel depth estimation from past experience, the method comprises: searching in look-up tables so as to determine whether, or not, said look-up tables contain channel-related information which is associated with the environmental parameters values; when the said look-up tables contain channel-related information which is associated with the environmental parameters values, using channel depth estimation contained in the channel-related information contained in said look-up tables; when the said look-up tables do not contain channel-related information which is associated with the environmental parameters values, using channel depth estimation as in worst case.

Thus, improvement of operation of the equalization resources is easily achieved.

In a particular embodiment, the look-up tables are at least partially populated by: monitoring equalization performance of the equalizer for determining channel learning data; timestamping the channel learning data; obtaining environmental learning data reflecting actual environmental conditions of the optical line; timestamping the environmental learning data; associating the environmental learning data and the channel learning data using timestamp information.

Thus, the look-up tables are populated, and their content is improved, along experience acquired by the transceiver optical device.

In a particular embodiment, the look-up tables are at least partially populated by obtaining learning data for another channel with similar deployment conditions of optical line.

Thus, the look-up tables are populated, and their content is improved, using experience acquired with another optical line.

In a particular embodiment, the method further comprises adding a predetermined depth margin to the channel depth estimation.

Thus, channel variations and estimation errors can easily be compensated.

In a particular embodiment, the predetermined depth margin depends on time of coherence of the channel and/or actual equalization performance and/or time elapsed since last update of actual knowledge of the channel characteristics.

Thus, the depth margin can be optimized according to circumstances.

In a particular embodiment, the equalization resources include hardware blocks used for performing the equalization on the optical signals received via the channel of the optical line.

Thus, energy consumption improvement can be achieved for hardware resources.

In a particular embodiment, the equalization resources include equalization overhead in the optical signals received via the channel of the optical line, and the method comprises transmitting to another transceiver optical device transmitting said optical signals via the channel of the optical line equalization-related information indicating size of equalization overhead to be used for transmitting said optical signals.

Thus, computing resources improvement and latency improvement can be achieved for processing the equalization overhead, such as preamble.

In a particular embodiment, the method further comprises defining, according to the obtained channel depth estimation, a size of equalization overhead for other optical signals transmitted from the transceiver optical device to said another transceiver optical device.

Thus, said another transceiver optical device can also benefit from the improvement, considering a reciprocal channel.

In a particular embodiment, the environmental data are forecast environmental data for a future instant, and the usage of the equalization resources is scheduled to be activated when the future instant in question is reached.

Thus, equalization resources usage can be scheduled and improvement can be anticipated.

It is further proposed herein a transceiver optical device including an equalizer for performing equalization on optical signals received via a channel of an optical line, the transceiver optical device being configured for configuring equalization resources of the equalizer, the equalization resources being used by the equalizer for performing equalization on the optical signals received via the channel of the optical line, wherein the transceiver optical device comprises electronic circuitry configured for: obtaining environmental parameters values, wherein the environmental parameters values are values of environmental data about physical parameters or derivatives which have influence on the channel of the optical line; obtaining channel depth estimation from past experience in view of the environmental parameters values; selectively activating the equalization resources, for performing equalization on the optical signals received via the channel of the optical line, according to the obtained channel depth estimation.

BRIEF DESCRIPTION OF THE DRAWINGS

The characteristics of the invention will emerge more clearly from a reading of the following description of at least one example of embodiment, said description being produced with reference to the accompanying drawings, among which:

- Fig. 1 schematically represents an arrangement of an optical communications system, in which the present invention may be implemented;
- Fig. 2 schematically represents an arrangement of transceiver optical devices of the optical communications system;
- Fig. 3 schematically represents an arrangement of an equalization pre-configurator;
- Fig. 4 schematically represents an algorithm for selectively activating equalization resources, in one embodiment of the present invention;
- Fig. 5 schematically represents an algorithm for selectively activating equalization resources, in a particular embodiment of the present invention; and
- Fig. 6 schematically represents an algorithm for feeding look-up tables, in a particular embodiment of the present invention.

DETAILED DESCRIPTION OF AT LEAST ONE EMBODIMENT

It has to be noticed that, since wavelength and frequency are tied together through a direct inverse relationship, these two terms are indifferently used by the one skilled in the art, as they refer to the same concept.

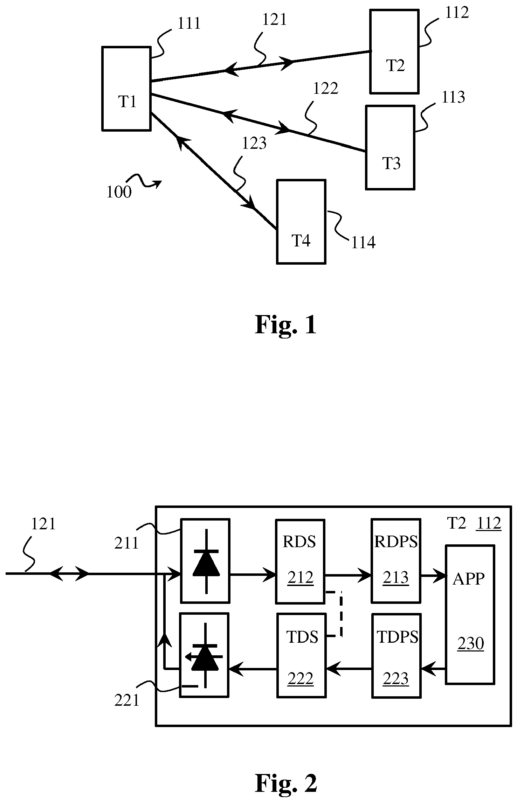

**Fig. 1** schematically represents an arrangement of an optical communications system 100, in which the present invention may be implemented.

The optical communications system 100 is part of an optical access and aggregation network.

The optical communications system 100 comprises at least a first transceiver optical device T1 111 and a second transceiver optical device T2 112 communicating with each other using an optical line 121.

As illustratively shown in Fig. 1, the optical communications system 100, the first transceiver optical device T1 111 may communicate with other transceiver optical devices T3 113, T4 114 using respective optical lines 122, 123.

Optical lines are optical paths between transceiver optical devices. Optical lines comprise optical fiber, but may further comprise power splitters, spectral splitter device to perform WDM (*Wavelength Division Multiplexing*), optical termination outlets, optical termination connectors...

For example, the first transceiver optical device T1 111 is an OLT (*Optical Line Terminal*) device, and the second transceiver optical device T2 112, as well as the other transceiver optical devices T3 113, T4 114, are ONU (*Optical Network Units*) devices.

**Fig. 2** schematically represents an arrangement of the transceiver optical devices of the optical communications system 100. Let's consider that Fig. 2 schematically represents an arrangement of the second transceiver optical device T2 112.

The second transceiver optical device T2 112 comprises a receive chain and a transmit chain.

The receive chain comprises a receive analog stage 211 including a photodiode to capture optical signals transmitted by the first transceiver optical device T1 111 via the optical line 121. The receive chain further comprises a receive digital stage RDS 212 for performing digital processing on the captured optical signals. Digital processing in the receive chain typically includes demodulation, equalization and removal of equalization overhead. Equalization overhead shall be understood as cyclic prefix and/or cyclic suffix in the frequency domain, or preamble in the time domain, depending on modulation/demodulation in use. The receive chain further comprises a receive data processing stage RDPS 213 for unpacking data to be processed by an application APP 230.

The transmit chain comprises a transmit data processing stage TDPS 223 for packing data provided by an application APP 230. The transmit chain further comprises a transmit digital stage TDS 222 for performing digital processing on the packed data. Digital processing in the transmit chain typically includes modulation and equalization overhead insertion. The transmit chain further comprises a transmit analog stage 221 including a laser to transmit optical signals to the first transceiver optical device T1 111 via the optical line 121.

As illustratively indicated by a doted line in Fig. 2, the receive digital stage RDS 212 may communicate equalization-related information to the transmit digital stage TDS 222 in order to configure a size of equalization overhead for the equalization overhead insertion in the transmit chain of the second transceiver optical device T2 112 and/or to provide feedback information to the first transceiver optical device T1 111 so that said first transceiver optical device T1 111 may perform accordingly its own equalization configuration and/or to provide feedback information to the first transceiver optical device T1 111 so that said first transceiver optical device T1 111 adjusts a size of equalization overhead of the optical signals transmitted to the second transceiver optical device T2 112 in accordance. In a variant, this communication of equalization-related information from the receive chain to the transmit chain may be performed via the receive data processing stage RDPS 213 and the transmit data processing stage TDPS 223 to ease information packing toward the first transceiver optical device T1 111.

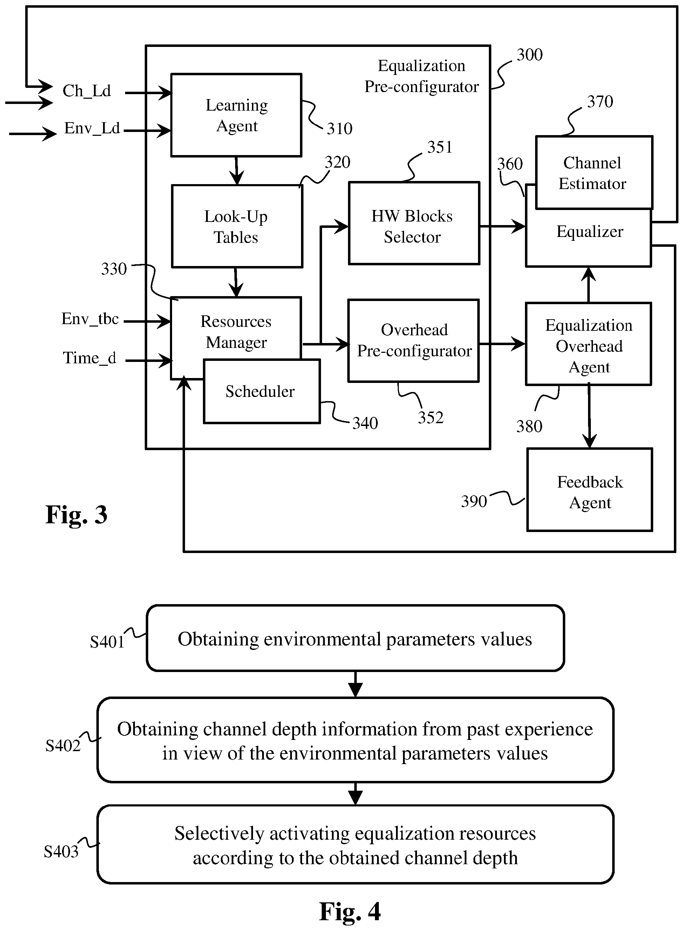

**Fig. 3** schematically represents an arrangement of an equalization pre-configurator 300. The equalization pre-configurator 300 is part of the receive digital stage RDS 212 of the arrangement in Fig. 2 and is connected to an equalizer 360.

The equalization pre-configurator 300 comprises a learning agent 310 configured for feeding look-up tables (LUT) 320, which are then used by a resources manager 330 in order to estimate channel depth. The estimated channel depth is used to configure appropriate equalization resources, via a hardware (HW) blocks selector 351 and an overhead pre-configurator 352.

The hardware blocks selector 351 is configured to selectively activate/inactivate hardware blocks (logic cells, registers, multipliers, memory storage) used for performing equalization and to indicate to the equalizer 360 which hardware blocks are usable for performing equalization. This enables energy consumption reduction by inactivating hardware blocks unnecessary for performing equalization in view of the estimated channel depth.

The overhead pre-configurator 352 is configured to indicate to an equalization overhead agent 380 of the receive digital stage RDS 212 what shall be the appropriate size of the equalization resources, which means how many equalization resources shall be processed in order to perform equalization. The equalization overhead agent 380 configures consequently the equalizer 360. The equalization overhead agent 380 may further be configured to also indicate to a feedback agent 390 what shall be the appropriate size of the equalization resources. This enables the feedback agent 390 to inform the transmit digital stage TDS 222 about the appropriate size of equalization resources, and consequently the transmit digital stage TDS 222 is able to adjust the size of equalization overhead (preamble, cyclic prefix, cyclic suffix) when transmitting optical signals via the optical line 121 to the first transceiver optical device T1 111. This is particularly applicable when the channel is reciprocal (substantially identical channels in both directions over the optical line 121). This limits equalization overhead in the direction from the second transceiver optical device T2 112 to the first transceiver optical device T1 111, and consequently this limits computing resources usage and energy consumption. It can be further noted that it improves latency (e.g., shortened preamble compared with the worst case) from the point of view of the first transceiver optical device T1 111. It further enables the transmit chain to inform the first transceiver optical device T1 111 about the appropriate size of equalization resources, and consequently the first transceiver optical device T1 111 is able to adjust the size of equalization overhead (preamble, cyclic prefix, cyclic suffix) when transmitting optical signals via the optical line 121 to the second transceiver optical device T2 112. This limits equalization overhead in the direction from the first transceiver optical device T1 111 to the second transceiver optical device T2 112, and consequently this limits computing resources usage and energy consumption. It can be further noted that it improves latency (*e.g.*, shortened preamble compared with the worst case) from the point of view of the second transceiver optical device T2 112.

In the receive digital stage RDS 212, the equalizer 360 includes or is connected to a channel estimator 370. The channel estimator 370 is configured to estimate the response of the optical line 121 so as to enable the equalizer 360 to determine adequate values of equalization coefficients (taps in the time domain). Channel estimation can be non-data-aided or data-aided. The channel estimator 370 is further configured to monitor equalization performance, the speed of change of the channel and the time of coherence of the channel. The time of coherence of the channel is defined as the time duration during which the channel has constant or monotonous behavior. The channel estimator 370 may further be configured to monitor signal-to-noise ratio (SNR), which is an indication of equalization performance.

The learning agent 310 is configured to receive environmental learning data Env_Ld. The environmental learning data Env_Ld are data related to environmental conditions of the optical line 121. Environmental data, such as the environmental learning data Env_Ld, are environmental information about physical parameters or derivatives which have influence on the channel of the optical line 121 and thus generate variations of the channel of the optical line 121, and may include: temperature information (as provided by temperature sensors along the optical line 121, potentially at locations of the first transceiver optical device T1 111 and of the second transceiver optical device T2 112), speed of change of temperature (due to clouds passing by, for example), wind strength information, etc. In order to be handled by the learning agent 310 to appropriately feed the look-up tables 320, the environmental learning data Env_Ld are timestamped.

The learning agent 310 is configured to also receive channel learning data Ch_Ld. The channel learning data Ch_Ld are data related to the channel depth, the speed of change of the channel and the time of coherence of the channel. When several channels are available (such as for the first transceiver optical device T1 111 in Fig. 1 for communicating with various transceiver optical devices T2 111, T3 113, T4 114), the channel learning data Ch_Ld are associated with a channel identifier ChID. In order to be handled by the learning agent 310 to appropriately feed the look-up tables 320, the channel learning data Ch_Ld are timestamped. The channel learning data Ch_Ld may be provided by the channel estimator 370, as already explained.

The learning agent 310 is configured to associate channel learning data Ch_Ld and environmental learning data Env_Ld, by relying on timestamp information, *i.e.,* timestamp information of the channel learning data Ch_Ld and timestamp information of the environmental learning data Env_Ld match. The associated learning data Ch_Ld and environmental learning data Env_Ld populate the look-up tables 320. Thus, from environmental data to be considered Env_tbc, the resources manager 330 is able to obtain corresponding channel data, such as channel depth information.

The channel learning data Ch_Ld and the environmental learning data Env_Ld may be provided by setup. In this case, the channel learning data Ch_Ld and the environmental learning data Env_Ld are identically timestamped so as to enable association thereof by the learning agent 310. As a first embodiment, the channel learning data Ch_Ld and the environmental learning data Env_Ld are results of simulations. As a second embodiment, the channel learning data Ch_Ld and the environmental learning data Env_Ld are data obtained for another channel with similar deployment conditions of optical line. For example, if the transceiver optical device T3 113 is located nearby the second transceiver optical device T2 112, channel learning data Ch_Ld obtained by the transceiver optical device T3 113 can be used as setup data for the second transceiver optical device T2 112 in the same environmental conditions (*i.e.*, same environmental learning data Env_Ld).

The channel learning data Ch_Ld may be provided by monitoring operations of the receive chain, and more particularly by monitoring the response of the channel, by the channel estimator 370. Thus, once channel data have been determined in real conditions by the channel estimator 370, these channel data can be used later on when similar environmental conditions are met. The corresponding environmental learning data Env_Ld may be provided in real-time, for example by receiving measurements from sensors or from an environmental data server in charge of gathering environmental measurements for the optical communications system 100.

Thanks to the feeding of the look-up tables 320 by the learning agent 310, the resources manager 330 is able to obtain estimation of the channel depth, and potentially other channel-related information, from the environmental data to be considered Env_tbc. This enables the resources manager 330 to determine equalization resources needs (and potentially anticipate), in view of provided environmental data Env_tbc. From the channel depth information contained in the look-up tables 320, the resources manager 330 may apply a predetermined depth margin, in order to face potential time variations of channel characteristics. The depth margin may be fixed, or may vary according to predetermined criteria. Such predetermined criteria may be the time of coherence of the channel and/or actual equalization performance (as for instance shown by signal-to-noise ratio (SNR)) and/or time elapsed since last update of actual knowledge of the channel characteristics. In this latter case, more margin is used when the time of coherence of the channel shortens and/or when signal-to-noise ratio goes worse and/or when a time greater than a predefined threshold has elapsed since last update of actual knowledge of the channel characteristics.

The resources manager 330 may include or be connected to a scheduler 340 configured to schedule later configurations of the equalization resources via the hardware blocks selector 351 and the overhead pre-configurator 352. This enables anticipating foreseen changes of channel characteristics. For instance, the resources manager 330 receives environmental data to be considered Env_tbc which are forecast environmental data (*e.g.*, storm to come in a near future) with time data Time_d (future instant). The resources manager 330 is able to program the scheduler 340 with foreseen channel depth in correspondence with said time data. When the scheduler 340 detects that the future instant in question is reached, the scheduler 340 is configured to instruct the resources manager 330 to configure the hardware blocks selector 351 and the overhead pre-configurator 352 in accordance with the foreseen channel depth. As already said, a depth margin can be applied, for instance as a function of the time elapsed since the scheduler 340 has been programmed.

**Fig. 4** schematically represents an algorithm for selectively activating equalization resources, in one embodiment of the present invention. The algorithm of Fig. 4 is executed by the receive chain of a transceiver optical device as shown in Fig. 2 and more particularly its receive digital stage RDS 212. In view of Fig. 3, the algorithm of Fig. 4 is executed by the equalization pre-configurator 300.

In a step S401, the transceiver optical device obtains environmental parameters values. The environmental parameters values are environmental information about physical parameters or derivatives, which have influence on the channel and thus generate variations of the channel (temperature, vibrations...).

In a step S402, the transceiver optical device obtains channel depth information from past experience in view of the environmental parameters values. The past experience is preferably channel depth encountered by the transceiver optical device under same environmental conditions as reflected by environmental parameters values. Past experience may be obtained by simulations or obtained for another channel with similar deployment conditions of optical line.

In a step S403, the transceiver optical device selectively activates equalization resources according to the obtained channel depth. The equalization resources are hardware blocks (logic cells, registers, multipliers, memory storage) used for performing equalization. The equalization resources may further be equalization overhead (namely, cyclic prefix and/or cyclic suffix in the frequency domain, or preamble in the time domain).

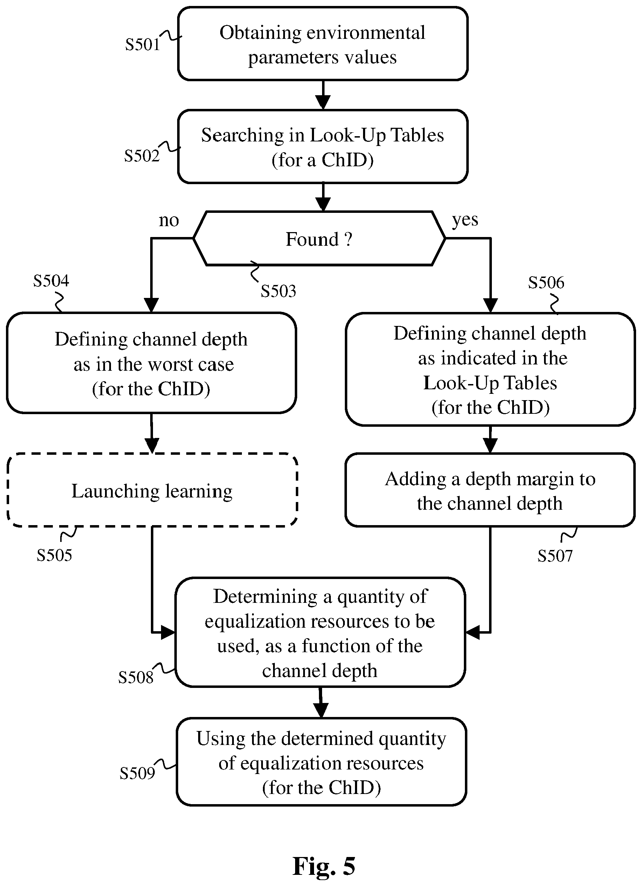

**Fig. 5** schematically represents an algorithm for selectively activating equalization resources, in a particular embodiment of the present invention. The algorithm of Fig. 5 is executed by the receive chain of a transceiver optical device as shown in Fig. 2 and more particularly its receive digital stage RDS 212. In view of Fig. 3, the algorithm of Fig. 5 is executed by the equalization pre-configurator 300.

In a step S501, the transceiver optical device obtains environmental parameters values (environmental data to be considered Env_tbc in the scope of Fig. 3). The environmental parameters values are environmental information about physical parameters or derivatives which have influence on the channel and thus generate variations of the channel (temperature, vibrations..

In a step S502, the transceiver optical device searches in the look-up tables 320 so as to determine whether, or not, said look-up tables 320 contain channel-related information which is associated with the environmental parameters values. The transceiver optical device may search for a particular channel associated with a channel identifier ChID.

In a step S503, the transceiver optical device determines whether, or not, such channel-related information has been found in the look-up tables 320 (potentially for the channel identifier ChID in question). If so, it means that past experience can be used to pre-configure equalization resources, and a step S506 is performed; otherwise, it means that default configuration of equalization resources shall be used, and a step S504 is performed.

In the step S504, the transceiver optical device defines channel depth as in the worst case. The worst case may differ for one optical line to another, namely for one channel identifier ChID to another. Indeed, the worst case is for example be more severe when the optical line includes longer optical fiber compared with another optical line.

In a step S505, the transceiver optical device may optionally launch learning in order to feed the look-up tables 320 with channel-related data that correspond to the environmental parameters values (environmental conditions) in question. This is particularly true when the environmental parameters values reflect current environmental conditions (not for later scheduling). A particular embodiment is disclosed hereafter with respect to Fig.

6. Then a step S508 is performed.

In the step S506, the transceiver optical device defines channel depth as indicated in the look-up tables 320 in association with the environmental parameters values obtained in the step S501. Past experience is thus used to estimate the channel depth.

In a step S507, the transceiver optical device preferably adds the depth margin to the channel depth obtained from the look-up tables 320 in the step S506. Then the step S508 is performed. The depth margin enables to face potential time variations of channel characteristics and also compensate for some inaccuracy in channel depth estimation.

In the step S508, the transceiver optical device determines a quantity of equalization resources to be used, as a function of the channel depth. The equalization resources are hardware blocks (logic cells, registers, multipliers, memory storage) used for performing equalization. The equalization resources may further be equalization overhead (namely, cyclic prefix and/or cyclic suffix in the frequency domain, or preamble in the time domain).

As already mentioned, various equalization techniques may be used by the transceiver optical device. It is known that there is, for each equalization technique, a deterministic correspondence between the channel depth and the amount of equalization resources (hardware blocks, equalization overhead).

In a step S509, the transceiver optical device uses, for equalization (on optical signals received via the optical line 121 for the second transceiver optical device T2 112), the determined quantity of equalization resources. In other words, the transceiver optical device selectively activates equalization resources according to the obtained channel depth (potentially for transmissions via the channel associated with the channel identifier ChID in question). Thus, equalization resources in use are defined according to the worst case only if no past experience has been recorded in the look-up tables 320, and otherwise, equalization resources in use are defined according to said past experience and energy consumption is thus reduced compared with the worst case.

It shall be noted that usage of the equalization resources in the step S509 can refer to an immediate usage when the environmental parameters values (environmental data to be considered Env_tbc in the scope of Fig. 3) reflect current environmental conditions, or to a future usage (via the scheduler 340 in Fig. 3) when the environmental parameters values reflect future environmental conditions (associated with time data Time_d in the scope of Fig. 3). In this latter case, the environmental data are forecast environmental data for a future instant, and the usage of the equalization resources is scheduled to be activated when the future instant in question is reached.

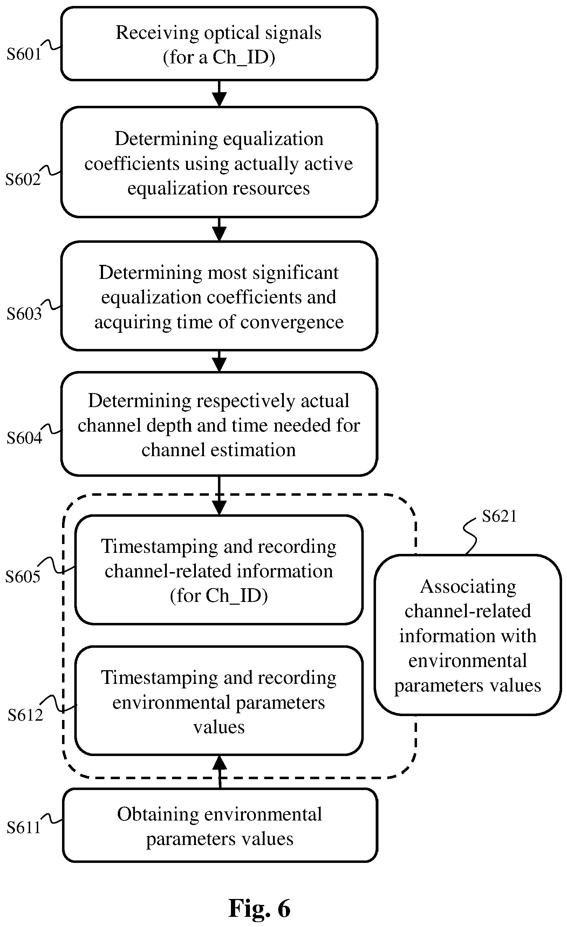

**Fig. 6** schematically represents an algorithm for feeding the look-up tables 320, in a particular embodiment of the present invention. The algorithm of Fig. 6 is executed by the receive chain of a transceiver optical device as shown in Fig. 2 and more particularly its receive digital stage RDS 212. In view of Fig. 3, the algorithm of Fig. 6 is executed by the equalization pre-configurator 300.

In a step S601, the transceiver optical device receives optical signals (*e.g.*, via the optical line 121 for the second transceiver optical device T2 112). The optical signals may be received via a channel associated with a channel identifier ChID.

In a step S602, the transceiver optical device determines equalization coefficients using actually active equalization resources. The channel estimator 370 is thus able to monitor performance of equalization.

In a step S603, the transceiver optical device determines the most significant equalization coefficients and acquires time of convergence for finding the equalization coefficients. The most significant equalization coefficients are coefficients that are above a predefined threshold value. The time of convergence is a time after which refinement of the equalization coefficients does not vary more than a predefined threshold ratio of the magnitude of the coefficients.

In a step S604, the transceiver optical device determines respectively (from the most significant equalization coefficients and the time of convergence) the actual channel depth and the time (quantity of symbols) needed for setting channel equalization. Indeed, the most significant equalization coefficients directly provide the optical signal spreading to be taken into account to be able to recover a symbol of the optical signal among successive symbols. And the time needed for setting channel equalization directly provides the size of equalization overhead (size of the preamble / cycle prefix / cyclic suffix).

In a step S605, the transceiver optical device records the channel-related information obtained in the step S604 (channel learning data Ch_Ld in the scope of Fig. 3) in the look-up tables 320. The channel-related information may be associated with the channel identifier ChID. The transceiver optical device timestamps the channel-related information in order to record at which instant said channel-related information has been obtained.

In an independent process, in a step S611, the transceiver optical device obtains environmental parameters values (environmental learning data Env_Ld in the scope of Fig. 3). The environmental parameters values reflect actual environmental conditions.

Then, in a step S612, the transceiver optical device records the environmental parameters values obtained in the step S611 in the look-up tables 320. The transceiver optical device timestamps the environmental parameters values in order to record at which instant said environmental parameters values have been obtained.

Both steps S605 and S612 are part of a learning phase enabling to feed the look-up tables 320. By associating, in a step S621, the channel learning data Ch_Ld and the environmental learning data Env_Ld thanks to timestamping information associated therewith, the transceiver optical device is able to know what channel depth, and other channel-related information, can be estimated for what environmental conditions.

**Claims**

1. A method for configuring equalization resources of an equalizer (360) of a transceiver optical device (112), wherein the equalization resources are used by the equalizer (360) for performing equalization on optical signals received via a channel of an optical line (121), wherein the method comprises:

   - obtaining (S401) environmental parameters values, wherein the environmental parameters values are values of environmental data about physical parameters or derivatives which have influence on the channel of the optical line;
   - obtaining (S402) channel depth estimation from past experience in view of the environmental parameters values;
   - selectively activating (S403) the equalization resources, for performing equalization on the optical signals received via the channel of the optical line, according to the obtained channel depth estimation.

2. The method according to claim 1, wherein, for obtaining channel depth estimation from past experience, the method comprises:

   - searching (S502) in look-up tables (320) so as to determine whether, or not, said look-up tables (320) contain channel-related information which is associated with the environmental parameters values;
   - when the said look-up tables (320) contain channel-related information which is associated with the environmental parameters values, using channel depth estimation contained in the channel-related information contained in said look-up tables (320);
   - when the said look-up tables (320) do not contain channel-related information which is associated with the environmental parameters values, using channel depth estimation as in worst case.

3. The method according to claim 2, wherein the look-up tables (320) are at least partially populated by:

   - monitoring equalization performance of the equalizer for determining channel learning data;
   - timestamping the channel learning data;
   - obtaining environmental learning data reflecting actual environmental conditions of the optical line;
   - timestamping the environmental learning data;
   - associating the environmental learning data and the channel learning data using timestamp information.

4. The method according to claim 2 or 3, wherein the look-up tables (320) are at least partially populated by obtaining learning data for another channel with similar deployment conditions of optical line.

5. The method according to any one of claims 1 to 4, further comprising:

   - adding (S507) a predetermined depth margin to the channel depth estimation.

6. The method according to claim 5, wherein the predetermined depth margin depends on time of coherence of the channel and/or actual equalization performance and/or time elapsed since last update of actual knowledge of the channel characteristics.

7. The method according to any one of claims 1 to 6, wherein the equalization resources include hardware blocks used for performing the equalization on the optical signals received via the channel of the optical line (121).

8. The method according to any one of claims 1 to 7, wherein the equalization resources include equalization overhead in the optical signals received via the channel of the optical line (121), and wherein the method comprises transmitting to another transceiver optical device (111) transmitting said optical signals via the channel of the optical line (121) equalization-related information indicating size of equalization overhead to be used for transmitting said optical signals.

9. The method according to claim 8, further comprising defining, according to the obtained channel depth estimation, a size of equalization overhead for other optical signals transmitted from the transceiver optical device (112) to said another transceiver optical device (111).

10. The method according to any one of claims 1 to 9, wherein the environmental data are forecast environmental data for a future instant, and the usage of the equalization resources is scheduled to be activated when the future instant in question is reached.

11. A transceiver optical device (112) including an equalizer (360) for performing equalization on optical signals received via a channel of an optical line (121), the transceiver optical device (112) being configured for configuring equalization resources of the equalizer (360), the equalization resources being used by the equalizer (360) for performing equalization on the optical signals received via the channel of the optical line (121), wherein the transceiver optical device (112) comprises electronic circuitry configured for:

- obtaining (S401) environmental parameters values, wherein the environmental parameters values are values of environmental data about physical parameters or derivatives which have influence on the channel of the optical line (121);
- obtaining (S402) channel depth estimation from past experience in view of the environmental parameters values;
- selectively activating (S403) the equalization resources, for performing equalization on the optical signals received via the channel of the optical line (121), according to the obtained channel depth estimation.

**Fig. 1**

**Fig. 2**

**Fig. 3**

S401 — Obtaining environmental parameters values

S402 — Obtaining channel depth information from past experience in view of the environmental parameters values

S403 — Selectively activating equalization resources according to the obtained channel depth

**Fig. 4**

S501 — Obtaining environmental parameters values

S502 — Searching in Look-Up Tables (for a ChID)

no — Found ? — yes
S503

S504 — Defining channel depth as in the worst case (for the ChID)

S506 — Defining channel depth as indicated in the Look-Up Tables (for the ChID)

Launching learning
S505

S507 — Adding a depth margin to the channel depth

S508 — Determining a quantity of equalization resources to be used, as a function of the channel depth

S509 — Using the determined quantity of equalization resources (for the ChID)

**Fig. 5**

S601 — Receiving optical signals
(for a Ch_ID)

S602 — Determining equalization
coefficients using actually active
equalization resources

S603 — Determining most significant
equalization coefficients and
acquiring time of convergence

S604 — Determining respectively actual
channel depth and time needed for
channel estimation

S605 — Timestamping and recording
channel-related information
(for Ch_ID)

S612 — Timestamping and recording
environmental parameters
values

S621 — Associating
channel-related
information with
environmental
parameters values

S611 — Obtaining environmental
parameters values

**Fig. 6**

Europäisches
Patentamt

European
Patent Office

Office européen
des brevets

# EUROPEAN SEARCH REPORT

Application Number

EP 23 30 5866

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/293285 A1 (ARONSON LEWIS B [US] ET AL) 1 December 2011 (2011-12-01) <br> * paragraphs [0003] - [0014] * <br> * paragraphs [0095] - [0096] * <br> * figure 21A * <br> ----- | 1-11 | INV. <br> H04B10/40 <br> H04B10/69 <br> H04L25/03 |
| A | US 2019/260615 A1 (RAN ADEE OFIR [IL]) 22 August 2019 (2019-08-22) <br> * paragraphs [0004] - [0005] * <br> * paragraph [0031] * <br> * paragraph [0111] * <br> ----- | 1-11 | |
| A | US 2017/149510 A1 (BOLSHTYANSKY MAXIM [US] ET AL) 25 May 2017 (2017-05-25) <br> * claims 1-19 * <br> ----- | 1-11 | |

TECHNICAL FIELDS
SEARCHED      (IPC)

H04B
H04L

The present search report has been drawn up for all claims

| Place of search | Date of completion of the search | Examiner |
|---|---|---|
| Munich | 15 November 2023 | Rolan Cisneros, E |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 30 5866

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2023

| Patent document cited in search report | | Publication date | Patent family member(s) | | Publication date |
|---|---|---|---|---|---|
| US 2011293285 | A1 | 01-12-2011 | AU 2003253704 | A1 | 06-01-2004 |
| | | | DE 10392928 | T5 | 04-05-2006 |
| | | | GB 2406988 | A | 13-04-2005 |
| | | | US 2004076113 | A1 | 22-04-2004 |
| | | | US 2004076119 | A1 | 22-04-2004 |
| | | | US 2004091028 | A1 | 13-05-2004 |
| | | | US 2005169168 | A1 | 04-08-2005 |
| | | | US 2007031153 | A1 | 08-02-2007 |
| | | | US 2010111539 | A1 | 06-05-2010 |
| | | | US 2011293285 | A1 | 01-12-2011 |
| | | | WO 2004002023 | A2 | 31-12-2003 |
| US 2019260615 | A1 | 22-08-2019 | US 2019260615 | A1 | 22-08-2019 |
| | | | US 2020374159 | A1 | 26-11-2020 |
| | | | US 2022141055 | A1 | 05-05-2022 |
| US 2017149510 | A1 | 25-05-2017 | US 2017149510 | A1 | 25-05-2017 |
| | | | WO 2017091393 | A1 | 01-06-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- IMT Vision: Framework and overall objectives of the future development of IMT for 2020 and beyond. *ITU-R M.2083,* September 2015

- Study on new radio access technology: Radio access architecture and interfaces. *3GPP TR 38.801 V 14.0.0,* March 2017